# EUROPEAN PATENT APPLICATION

(11) **EP 2 568 434 A1**
(43) Date of publication of application: **13.03.2013**
(21) Application number: 12183390.9
(22) Date of filing: 06.09.2012
(51) Int. Cl.: G06Q 50/06, G06Q 10/06

(54) **Data processing method and system**

(30) Priority: 09.09.2011 GB 201115643
(71) Applicant: Onzo Limited, London WC2H 7JB (GB)
(72) Inventor: Westbrooke, Adam Richard, Sevenoaks, Kent TN14 5AQ (GB)
(74) Representative: Hill, Justin John

(57) **Abstract**

A method and apparatus for operating a data processing system comprising a data store and an analysis means, wherein data is stored in the data store as segments of related data, the method comprising the steps of: identifying data in the data store requiring processing; identifying a data segment in the data store related to said identified data; copying the identified data requiring processing to a data storage part of the analysis means; and the analysis means reviewing the data in the data storage part of the analysis means to identify what analysis tasks must be carried out on the identified data; the analysis means storing the identified analysis tasks in a task storage part of the analysis means; the analysis means reviewing the stored analysis tasks to identify what required data is required to carry out the analysis tasks; the analysis means reviewing the data in the data storage part of the analysis means to identify any missing required data which is not stored in the data storage part of the analysis means; copying the identified missing required data to the data storage part of the analysis means; the analysis means executing an analysis task from the task storage part of the analysis means; the analysis means removing the executed analysis task from the task storage part of the analysis means and updating the data in the data storage part of the analysis means based on the output of the analysis task; and the analysis means returning to the step of reviewing the data in the data storage part of the analysis means to identify what analysis tasks must be carried out on the identified data; and when the execution of stored analysis tasks is stopped, updating the data in the data store based on the updated data in the data storage part of the analysis means; wherein the data store comprises at least one data storage media and the functions of the analysis means are carried out in random access memory.

## Description

### Field of the Invention

This invention relates to a data processing method, system and computer code for the processing of data, particularly data associated with consumption of utilities such as gas, water and electricity.

### Background

There is an ongoing and urgent need to reduce consumption of energy and water both for environmental and cost reasons.

A large proportion of the energy and water supplied by utilities suppliers is wasted as a result of inefficiencies such as use of electrical appliances that have poor efficiency or for behavioural reasons such as appliances that are left switched on and so consume electricity even when not in use, or excessive consumption of water. This leads to wastage and increased costs for utilities and customers. Moreover, with respect to electricity, electrical energy use in buildings accounts for a very large proportion of all carbon emissions. Demand for utilities can vary dramatically between identical buildings with the same number of occupants, and this suggests that reducing waste through behavioural efficiency is essential. Therefore, efforts are required to change the patterns of utilities use by consumers.

The utilities suppliers recognise three major obstacles to progress in this objective: a shortage of sources of competitive advantage, a lack of detailed understanding of their customers, and a lack of "touch points", i.e. ways of interacting with the customers. Opportunities for differentiation revolve mainly around price and "green" issues, i.e. reduction of environmental impact. The utilities suppliers have very little information about their customers' behaviour since electricity, gas and water meters collect whole house data continuously and are read infrequently.

Meters to measure total consumption of utilities of a household are commonplace for each of gas, electricity and water, however this total is not useful in identifying areas in which efficiencies may be possible (for brevity, we refer herein to a "household", however it will be appreciated that the present invention is not limited to a domestic house but may be applied to any domestic, workplace or other setting that receives its own discrete utilities supplies, in particular mains electricity supply from an electricity grid; water supply; and / or gas supply.).

Apparatus for monitoring consumption of a resource such as electricity supplied on a cable is disclosed in WO 2008/142425. While a meter of this type is beneficial in assisting a user to review energy consumption patterns, when the meter is operated in a high resolution mode, for example measuring power consumption at one second intervals, and the meters are supplied to large numbers of utility customers there is a problem in processing the relatively large amount of power consumption data produced by the many different meters without excessive demands for computing resources.

The power consumption data may, for example, be stored and subsequently processed by applications such as analysis of household power consumption by an end-user or by a utility supplier, or monitoring occupancy and activity within a household

It is therefore an object of the invention to provide a data processing method to allow processing of large amounts of utilities consumption data from many different households.

### Summary of the Invention

According to a first aspect the invention provides a method of operating a data processing system comprising a data store and an analysis means, wherein data is stored in the data store as segments of related data, the method comprising the steps of:
identifying data in the data store requiring processing;
identifying a data segment in the data store related to said identified data;
copying the identified data requiring processing to a data storage part of the analysis means; and
the analysis means reviewing the data in the data storage part of the analysis means to identify what analysis tasks must be carried out on the identified data;
the analysis means storing the identified analysis tasks in a task storage part of the analysis means;
the analysis means reviewing the stored analysis tasks to identify what required data is required to carry out the analysis tasks;
the analysis means reviewing the data in the data storage part of the analysis means to identify any missing required data which is not stored in the data storage part of the analysis means;
copying the identified missing required data to the data storage part of the analysis means;
the analysis means executing an analysis task from the task storage part of the analysis means;
the analysis means removing the executed analysis task from the task storage part of the analysis means and updating the data in the data storage part of the analysis means based on the output of the analysis task; and
the analysis means returning to the step of reviewing the data in the data storage part of the analysis means to identify what analysis tasks must be carried out on the identified data; and
when the execution of stored analysis tasks is stopped, updating the data in the data store based on the updated data in the data storage part of the analysis means;
wherein the data store comprises at least one data storage media and the functions of the analysis means are carried out in random access memory.

Preferably, the data processing system further comprises a job store storing analysis tasks, and the method includes the further steps of:
reviewing the analysis tasks stored in the job store to identify analysis tasks related to the identified data and the identified related data segment; and
copying the identified analysis tasks to the task storage part of the analysis means;
wherein these additional steps take place before the step of the analysis means reviewing the stored analysis tasks to identify what data is required to carry out the analysis tasks.

Preferably, the method further comprises the further step of, when the processing of stored analysis tasks is stopped, removing the executed analysis tasks from the job store.

Preferably, if, when the processing of stored analysis tasks is stopped, there are analysis tasks in the task storage part which have not been executed, these analysis tasks which have not been executed are added to the job store.

Preferably, the data processing system comprises a plurality of analysis means.

Preferably, the identified data and the identified related data segment copied to the data storage part of the analysis means are marked as under processing in the data store so that they cannot be copied to another one of the plurality of analysis means.

Preferably, the analysis tasks copied to the task storage part of the analysis means are marked as under processing in the job store so that they cannot be copied to another one of the plurality of analysis means.

Preferably, the analysis means reviews all of the stored analysis tasks to identify what data is required to carry out the analysis tasks and identifies all missing required data required by all of the analysis tasks before requesting copying all of the identified missing required data to the data storage part of the analysis means as a single request.

Preferably, the data in the data store requiring processing comprises new data and the required processing comprises updating a stored segment of related data to include the new data. Preferably, the segments of related data comprise time series data and the data in the data store requiring processing comprises new data extending the time series.

Preferably, the segments of related data comprise time series data and the data in the data store requiring processing comprises new data relating to a time which is already included in the time series data stored in the data store.

Preferably, the time which is already included in the time series data is a time period.

Preferably, the execution of stored analysis tasks is stopped when the step of reviewing the data in the data storage part of the analysis means does not identify any further analysis tasks, and all stored analysis tasks have been carried out.

Preferably, the processing of stored analysis tasks is stopped when the step of reviewing the data in the data storage part of the analysis means does not identify any further analysis tasks, and all stored analysis tasks which have not been carried out are analysis tasks which the analysis means is not authorized to carry out.

Preferably, the stored analysis tasks which have not been carried out are analysis tasks which the analysis means is not authorized to carry out because they are analysis tasks which the analysis means is not able to carry out.

Preferably, the processing of stored analysis tasks is stopped when the analysis means reaches a predetermined processing time limit.

Preferably, the analysis means reviews the stored analysis tasks to identify what required data is required to carry out the analysis tasks and reviews the data in the data storage part of the analysis means to identify any missing required data which is not stored in the data storage part of the analysis means before executing an analysis task from the task storage part of the analysis means.

Preferably, the segments of related data comprise time series data, and each analysis task is carried out on data relating to a specified time.

Preferably, the specified time is a specified time period.

Preferably, the data storage media is a data storage disc.

Preferably, the segments of related data each comprise a time series of utility consumption values measured at a series of different times.

Preferably, the each segment of related data comprises a time series of utility consumption values for a single consumer.

Preferably, the utility is selected from gas, electricity and water.

Preferably, the utility is electricity.

Preferably, the measured electricity consumption data includes data of real power.

Preferably, the measured electricity consumption data includes data of reactive power.

Preferably, the measured electricity consumption data includes data of reactive power and real power.

According to a second aspect the invention provides a data processing system comprising means to carry out the method according to the first aspect..

According to a third aspect the invention provides a data processing system adapted to analyse data, the system comprising;
a data processor means, a data storage means comprising at least one data storage media, a random access memory means, and an analysis means carried out in the random access memory, the analysis means comprising a data storage part and a task storage part, and ;
wherein data is stored in the data storage means as segments of related data, the data processor means being adapted to carry out the steps of:
   identifying data in the data storage means requiring processing;
   identifying a data segment in the data storage means related to said identified data;
   copying the identified data requiring processing to the data storage part of the analysis means; and
   the analysis means being adapted to carry out the steps of:
      reviewing the data in the data storage part of the analysis means to identify what analysis tasks must be carried out on the identified data;
      storing the identified analysis tasks in the task storage part of the analysis means;
      reviewing the stored analysis tasks to identify what required data is required to carry out the analysis tasks;
      reviewing the data in the data storage part of the analysis means to identify any missing required data which is not stored in the data storage part of the analysis means;
      the data processor means being adapted to copy the identified missing required data to the data storage part of the analysis means;
      the analysis means being adapted to carry out the steps of:
   executing an analysis task from the task storage part of the analysis means;
   removing the executed analysis task from the task storage part of the analysis means and updating the data in the data storage part of the analysis means based on the output of the analysis task; and
returning to the step of reviewing the data in the data storage part of the analysis means to identify what analysis tasks must be carried out on the identified data; and
the data processor means being adapted to update the data in the data store based on the updated data in the data storage part of the analysis means when the execution of stored analysis tasks is stopped.

According to a third aspect the invention provides a computer program adapted to perform the method according to the first aspect.

According to a fourth aspect the invention provides a computer program comprising software code adapted to perform the method according to the first aspect.

According to a fifth aspect the invention provides a computer program comprising software code adapted to perform, in a data processing system comprising an analysis means and a data store comprising at least one data storage media and wherein data is stored in the data store as segments of related data, steps of:
identifying data in the data store requiring processing;
identifying a data segment in the data store related to said identified data;
copying the identified data requiring processing to a data storage part of the analysis means; and
the analysis means reviewing the data in the data storage part of the analysis means to identify what analysis tasks must be carried out on the identified data;
the analysis means storing the identified analysis tasks in a task storage part of the analysis means;
the analysis means reviewing the stored analysis tasks to identify what required data is required to carry out the analysis tasks;
the analysis means reviewing the data in the data storage part of the analysis means to identify any missing required data which is not stored in the data storage part of the analysis means;
copying the identified missing required data to the data storage part of the analysis means;
the analysis means executing an analysis task from the task storage part of the analysis means;
the analysis means removing the executed analysis task from the task storage part of the analysis means and updating the data in the data storage part of the analysis means based on the output of the analysis task; and
the analysis means returning to the step of reviewing the data in the data storage part of the analysis means to identify what analysis tasks must be carried out on the identified data; and
when the execution of stored analysis tasks is stopped, updating the data in the data store based on the updated data in the data storage part of the analysis means;
wherein the software code adapted to perform the functions of the analysis means in random access memory.

According to a sixth aspect the invention provides a computer readable storage medium comprising the program according to any one of the third to fifth aspects.

According to a seventh aspect the invention provides a computer program product comprising computer readable code according to the fourth aspect or the fifth aspect.

According to an eighth aspect the invention provides an integrated circuit configured to perform the steps according to the first aspect.

According to a ninth aspect the invention provides an article of manufacture comprising:
a machine-readable storage medium; and
executable instructions embodied in the machine readable storage medium that when executed by a programmable system comprising an analysis means, wherein data is stored in the data store as segments of related data, and a data store comprising at least one data storage media, cause the system to perform the steps of:
   identifying data in the data store requiring processing;
   identifying a data segment in the data store related to said identified data;
   copying the identified data requiring processing to a data storage part of the analysis means; and
   the analysis means reviewing the data in the data storage part of the analysis means to identify what analysis tasks must be carried out on the identified data;
   the analysis means storing the identified analysis tasks in a task storage part of the analysis means;
   the analysis means reviewing the stored analysis tasks to identify what required data is required to carry out the analysis tasks;
   the analysis means reviewing the data in the data storage part of the analysis means to identify any missing required data which is not stored in the data storage part of the analysis means;
   copying the identified missing required data to the data storage part of the analysis means;
   the analysis means executing an analysis task from the task storage part of the analysis means;
   the analysis means removing the executed analysis task from the task storage part of the analysis means and updating the data in the data storage part of the analysis means based on the output of the analysis task; and
   the analysis means returning to the step of reviewing the data in the data storage part of the analysis means to identify what analysis tasks must be carried out on the identified data; and
   when the execution of stored analysis tasks is stopped, updating the data in the data store based on the updated data in the data storage part of the analysis means;
   wherein the executable instructions cause the system to carry out the functions of the analysis means in random access memory.

The invention further provides systems, devices, computer-implemented apparatus and articles of manufacture for implementing any of the aforementioned aspects of the invention; computer program code configured to perform the steps according to the aforementioned method; a computer program product carrying program code configured to perform the steps according to the aforementioned method; and a computer readable medium carrying the computer program.

"Appliance" as used herein means any device that consumes one or more supplied utility, in particular gas, electricity or water.

### Description of Figures

The invention will now be described in detail with reference to the following figures in which:
Figure 1 is a diagram of a data processing system arranged to carry out the method of the present invention;
Figure 2 is a flow diagram showing a part of the method of the present invention.

### Detailed Description of the Invention

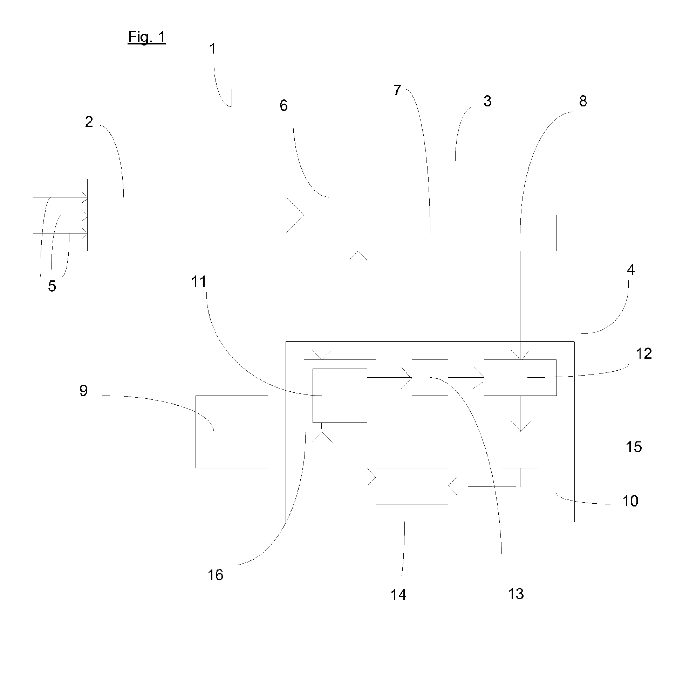

An example of a data processing method and system according to the present invention is illustrated in Figure 1 with respect to a system storing and analyzing electricity consumption data from a large number of consumers. It will be understood that the data processing method and system of the present invention may be used for other purposes and that the described embodiment is described with reference to the analysis and storage of electricity consumption data as an example only.

In particular, the data processing method and system of the present invention may be used to process other types of data. For example, substantially the same data processing method and system may be used for the measurement, analysis and storage of data relating to consumption of gas or water, or other utilities.

An explanatory diagram of an exemplary data processing system 1 is shown in figure 1. The data processing system 1 comprises a number of data access servers 2, a central data storage system 3, and a number of analysis servers 4. For simplicity and ease of understanding only a single data access server 2 and analysis server 4 are shown in figure 1.

Electricity consumption data from consumers is supplied to a data access server 2 of the data processing system 1 through communication links 5. The electricity consumption data relates to electricity consumption over time for a number of consumers, and this number of consumers may be large. It is envisaged that in practice the data processing system 1 may process electricity consumption data from substantially all of the customers of an electricity utility provider, so that the electricity consumption data may relate to hundreds of thousands, or millions, of consumers.

The electricity consumption data may comprise data regarding a plurality of different measured or calculated parameter values relating to electricity consumption over time. The parameter values may for example include one, some, or all of real power, reactive power, voltage, current and frequency of an electrical utility supply, and values derived from these parameter values.

A problem encountered in processing electricity consumption data in detail on such a large scale is the very large amount of electricity consumption data which must be stored and be accessible for processing, and the continuous receipt of more electricity consumption data. As a result of the very large amount of data which must be stored and the very high rate at which new data is received and must be stored and integrated with the existing stored data, it is difficult to process and store the electricity consumption data without the necessary computer hardware being uneconomically expensive. As a result it is desirable to increase the efficiency of processing and storing this data.

The number of data access servers 2, the number of communication links 5 connected to each data access server 2, and the manner in which the communication links 5 are arranged, will depend upon the manner in which the communication system(s) linking the electricity consumers to the data processing system 1 are organized and arranged.

The electricity consumers will usually be customers of an electricity utility supply company.

The data processing system 1 may be operated by an electricity utility supply company to process electricity consumption data from consumers who are customers of the utility. Alternatively, the data processing system 1 may be operated by other parties, such as electricity distribution network operators or utility data analysis companies, so that the consumers are not customers of the operator of the data processing system 1.

The data access server 2 receives consumer electricity consumption data sent to the data processing system 1 and organizes the received data. When the data access server 2 has organized the received data into a suitable format, the data access server 2 supplies the formatted data to the central data storage system 3 for processing and storage. The consumer electricity consumption data received by the data access server 2 will generally mainly be new data regarding consumer electricity consumption. However, the received data may also include updated or corrected data intended to replace data provided previously. Further, the received data may also include duplicate data which duplicates data provided previously. In practice it is not expected that duplicate data will normally be deliberately sent to the data processing system 1, but this may occur inadvertently. The precise mechanism by which corrected data or duplicate data is received at the data access server 2 will depend upon how the consumer electricity consumption data is obtained and how the communication system(s) linking the electricity consumers to the data processing system 1 are organized and arranged.

In one embodiment the data processing system 1 may be supplied with customer electricity consumption data through a nodal data processing system, for example as described in GB1107993.6. In this case the data processing system 1, or the, or each, data access server 2 of the data processing system 1, may be nodes of the nodal data processing system.

The central data storage system 3 comprises a central data store 6, a segment details table 7, and a central job queue 8. The central data store 6, the segment details table 7, and the central job queue 8 are all non-volatile data stores. In one example the central data store 6, the segment details table 7, and the central job queue 8 may be formed by a number of data storage devices. In one example these data storage devices may be disk drives. The central data store 6 will generally be very large. In one example the central data store 6 may be formed by a plurality of disk drives.

The central data store 6 stores data as data segments where a record of electricity consumption data over time for each consumer is separately stored as a single segment. Thus, in this example, each segment of data is a time series of the electricity consumption data relating to a particular consumer. In one example each time series of electricity consumption data may comprise a time series of events representing changes in electricity consumption. The data segments may stored in the central data store 6 according to any convenient data storage protocol. In some examples the data segments may stored in the central data store 6 as a database.

The central job queue 8 contains an ordered list of all outstanding jobs which are required to be carried out for the consumer electricity consumption data of the data segments stored in the central data store 6. A job is a defined analysis task which is to be carried out on data for a specified point or period of time from a specific segment. Each job stored in the central job queue 8 identifies the analysis task to be carried out together with the identity of the segment on which the analysis task is to be carried out and the point or period of time of the data for which the analysis task is to be carried out.

The point or period of time of the data for which the analysis is to be carried out may be identified directly as an actual time or time period. In some examples the point or period of time may be identified indirectly as a position or range of positions in the data segment.

It should be noted that the jobs are associated with a defined point or period of time. As a result, the data processing system 1 can process data at any point in the time series of data making up a segment. Accordingly, it is not necessary for the time series data to be processed in sequence order and the data processing system can process data received out of sequence. This may provide advantages in simplifying the sending of the consumer electricity consumption data to the data processing system because it is not necessary to ensure that the data is received in any specific order.

When consumer electricity consumption data is received from the data access server 2 by the central data storage system 3, the received data is stored in the central data store 6 as data related to the data segment for that consumer stored in the central data store 6. The newly received and stored data in the central data store 6 is initially marked to indicate that it is newly received data which has not yet been processed and stored together with a timestamp indicating when the changed data was stored in the central data store 6. For brevity the received data stored in the central data store 6 which has not yet been processed will be referred to as changed data herein. As explained above, in this example, each data segment is a record of the electricity consumption over time for a specific customer, and so will comprise time information implicitly or explicitly identifying power consumption values at different times. The time data comprised in the changed data and relating to the timing of the recorded power consumption values is entirely separate from the timestamps indicating when the changed data was stored. The received and stored data is marked as changed data until it has been assessed and any necessary jobs placed in a job queue of an analysis server, as described below. After these jobs have been processed by the analysis server the stored data segment is regarded as not having any changed data. In practice it is expected that the vast majority of the received data will be new customer electricity consumption data. However, this data is referred to as received data, rather than new data, to clarify that some of the received data may not be strictly new data, but instead may be a corrected version of, or a duplicate of, previously received stored data.

It should be noted that if received data comprising a corrected version of, or a duplicate of, already stored and assessed data is received, then an analysis task must again be carried out for the time period of this already stored and assessed data in order to integrate the newly received data with the already stored data.

The segment details table 7 contains entries indicating the storage time of the oldest changed data relating to each segment stored in the central data store 6. In one embodiment the segment details table 7 has an entry for each segment stored in the central data store 6 including a priority associated with the segment and the storage time of the oldest changed data relating to that segment, with those segments for which there is no changed data having the change time entry blank, or containing a null entry. As explained above, the storage time is the time at which the changed data was stored in the central data store 6. The storage time is, in effect, a time stamp indicating when the oldest changed data for a particular segment was changed.

When the received data is stored in the central data store 6 as changed data relating to a particular data segment stored in the central data store 6, the segment details table 7 is checked to see if there is any storage time of the oldest changed data relating to that segment recorded in the segment details table 7. If there is no such storage time recorded for the segment, the current time is entered as the storage time of the oldest changed data relating to that segment. Alternatively, if there is a storage time already recorded for the segment, this is not altered, since this already-recorded storage time must be older than the current time at which the changed data is currently being stored.

The priority associated with a segment may be changed based upon what action is required to be taken with respect to the segment, and the reason why this action is to be taken.

For example, all segments for which new data is received and stored in the central data store 6 as changed data will require processing in order to integrate the changed data with the previously stored segment data. However, usually this is a routine task carried out in response to new received data, for example from a meter, so that there will not usually be any disadvantage if this processing is delayed for a time. This is particularly the case because there will usually be significant delays between electricity consumption being measured, for example at a meter, and the electricity consumption data being received at the data processing system 1, so that a further delay before processing will not usually cause a problem. It should be noted that since each data segment relates to electricity consumption by a consumer it will usually be expected that changed data relating to each segment will be regularly received.

As a further example, segments which are required to be processed as a result of new or changed data submitted online by a consumer will also require processing. For example, a consumer may upload electricity consumption data, or submit new or changed parameter, fact, or profile information through an electricity supplier website. In this case the results of the processing job are desired by the consumer, who may be waiting for a response. If a consumer is expecting information regarding their electricity consumption as an immediate real-time response any delay in processing the job providing this information, even a relatively short delay, may adversely impact that consumer's satisfaction with the service they receive. In contrast, if the job is required in response to new or changed data provided as part of an automatic periodic analysis of consumer behavior a short delay in processing the job is unlikely to have any adverse effect.

Accordingly, in the above examples a segment required to be processed by a job in response to data submitted by a consumer may be assigned a high priority, a segment required to be processed by a job in response to data submitted by an automatic analysis process may be assigned an intermediate priority, and a segment associated with changed data received from a meter may be assigned a low priority.

In other examples the actions and reasons on which assigned priority is based and how they are related to different levels of priority may vary from case to case depending on precisely what processing is carried out by a specific data processing system 1. Further, the priority assigned to different tasks may be dynamically varied in response to changes in operation. For example, if a backlog of tasks of a particular type begins to build up the priority assigned to that task can be increased until the backlog is reduced.

The number of analysis servers 4 in the data processing system 1 may be selected as required in any specific application in order to provide the required processing capacity to process the customer electricity consumption data being received by the data processing system 1 and to carry out any required analysis on the segments stored in the central data store 6.

Each analysis server 4 comprises a segment processing manager 9 and a segment processing engine 10. The segment processing engine 10 comprises a local data store 11, a segment job queue 12, an assessor 13, an analysis component 14, a dispatcher 15 and a data manager 16. The data manager 16 manages the contents of the local data store 11. The functions of the segment processing engine 10 are carried out entirely using RAM.

The segment processing manager 9 selects data from the central data store 6 for processing by the segment processing engine 10 of the analysis server 4. The segment processing manager 9 reviews the segment details table 7 and identifies the segment or segments having the highest assigned priority in the segment details table 7. If there is only a single segment having the highest assigned priority the segment processing manager selects this segment. If there are plural segments having the highest assigned priority the segment processing manager 9 selects from these plural identified segments having the highest assigned priority the segment having the oldest storage time recorded in the segment details table 7.

When the segment processing engine 10 receives the identity of the selected segment from the segment processing manager 9, the data manager 16 of the segment processing engine 10 copies changed data from the identified segment from the central data store 6 into the local data store 11 of the segment processing engine 10. The changed segment data which is copied will include the changed data item for the selected segment corresponding to the oldest storage time recorded in the segment details table 7. The changed segment data which is copied will also include any other changed data item(s) for the segment which have not yet been processed. It should be understood that in general any specific segment may have no, one, or multiple, items of changed data, and that any specific segment having an oldest recorded storage time recorded in the segment details table 7 may have one, or multiple items of changed data. The changed segment data items which have not yet been processed in a selected segment can be readily identified because they have been marked as changed data, as explained above.

The changed data from the central data store 6 which is copied into the local data store 11 is marked as changed data when it is stored in the local data store 11.

The identified changed data in the identified segment in the central data store 6 which has been copied, which will include any and all items of changed data in the identified segment, are flagged as being "in processing". In the event that there is a failure of the analysis server 4, for any reason, the flagged data can be identified and again marked as changed data so that a further attempt will be made to process the changed data. This may prevent changed data failing to be properly processed in the event of a failure of the analysis server 4. In one example the flagged data may be marked as changed data by a watchdog process.

In systems having multiple analysis servers 4, the identified segment in the central data store 6 is flagged as being "in processing" in order to prevent data from the segment being copied and processed by another analysis server 4 while segment data is being processed by the analysis server 4. This may prevent conflicts between different versions of the same data being generated by different analysis servers 4. Conveniently, this flag may be stored in the segment details table 7.

The data manager 16 of the segment processing engine 10 also checks the central job queue 8 to identify any jobs which are required to be carried out for the identified segment. Any jobs in the central job queue 8 required to be carried out for the identified segment are copied into the segment job queue 12 of the segment processing engine 10. The identified jobs in the central job queue 8 which have been copied are flagged as being "in processing". In the event that there is a failure of the analysis server 4, for any reason, the flagged jobs can be identified so that a further attempt can later be made to carry out the flagged jobs. This may prevent jobs failing to be properly carried out in the event of a failure of the analysis server 4. It should be noted that in systems having multiple analysis servers 4, the flagged jobs cannot be executed by another analysis server 4 while they are being processed by the analysis server 4 because the identified segment is flagged as being "in processing" in the segment details table 7.

The assessor 13 has records indicating what jobs will need to be carried out by the analysis component 14 in order to process each type of data item which may be included in the changed data.

Further, the assessor 13 has a record for each possible job which may be carried out by the analysis component 14, the record specifying what data is required by the analysis component 14 in order to carry out the job.

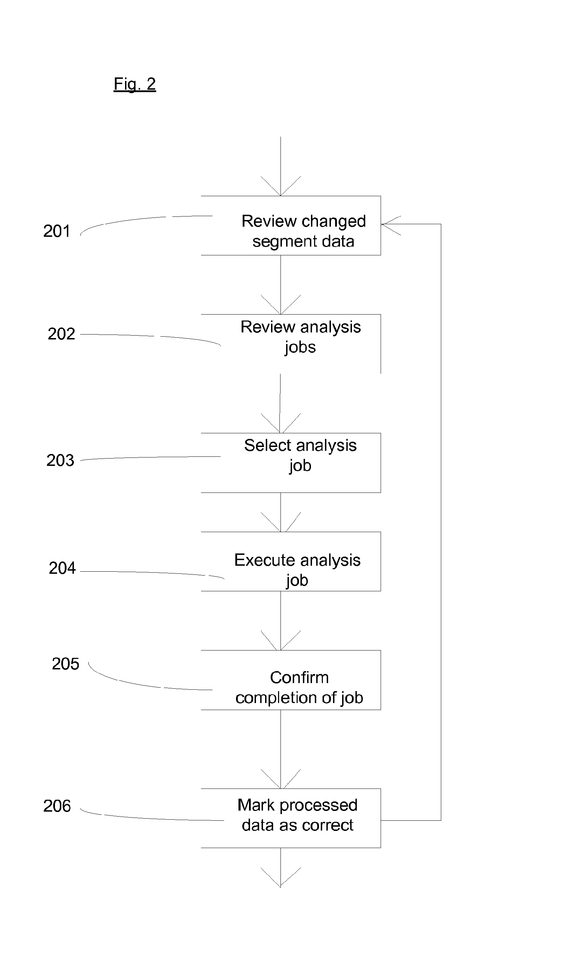

After the changed segment data from the central data store 6 has been stored in the local data store 11 by the data manager 16 of the segment processing engine 10, the analysis server 4 then carries out the following process, which is shown in Figure 2.

In a first step 201 the assessor 13 reviews the changed data to identify what changed data items are present in the changed data, and to determine what jobs will need to be carried out by the analysis component 14 in order to process the changed data. Each determined job is then placed in the segment job queue 12 by the assessor 13 and the changed data on which the determined job was carried out is reclassified as not being changed. Generally, this reclassifying will comprise removing a marking of the data as being changed data. Before the assessor 13 places a job in the segment job queue 12 the assessor 13 checks whether the job is already present in the segment job queue to be carried out on the same data. If the job is not already present in the segment job queue to be carried out on the same data, the job is placed in the segment job queue by the assessor 13. If the job is already present in the segment job queue to be carried out on the same data, the job is not placed again in the segment job queue.

The assessor 13 may decide whether or not a specific job will be carried out based upon both the amount and identity of the changed data. The assessor may decide that a specific job will be carried out only if the amount of the changed data reaches a threshold. For example, if a specific job is intended to be carried out daily the assessor 13 may decide that this job should be carried out only when a full day of new data has been received. This may improve efficiency by avoiding repeatedly carrying out the same job for small amounts of new data when the results of the job are only of interest when the threshold has been reached. Further, this may improve efficiency by allowing jobs to be optimized to deal with an amount of new data corresponding to the threshold amount.

The situation of the assessor 13 attempting to place the job in the segment job queue 12 twice for the same data may occur, for example, if a job has two different data items as inputs. If both of these data items change, the assessor 13 will identify the job as needing to be carried out when each of these changes is identified in the changed data, so that the job will be identified as needing to be carried out twice.

As explained above, analysis jobs may be placed in the segment job queue 12 by being copied from the central job queue 8, in addition to jobs placed in the segment job queue 12 by the assessor 13.

In a second step 202 the data manager 16 reviews each of the jobs in the segment job queue 12 and determines what data will be required by the analysis component 14 in order to carry out the job, and what data may be affected (that is, replaced or altered) by the output data of the job. The data manager 16 then identifies whether or not the determined required data and affected data is stored in the local data store 11. If any of the determined required data and affected data is not already stored in the local data store 11 the data manager 16 copies this required data and affected data from the central data store 6 to the local data store 11. If any of the copied required data and affected data is marked as changed in the central data store 6, this changed data is marked as changed data when it is stored in the local data store 11.

The data manager 16 preferably requests copies of all of the required data and affected data from the central data store 6 as a single operation. This may improve efficiency.

In a third step 203 the dispatcher 15 then selects jobs from the segment job queue 12 and passes them to the analysis component 14 for execution.

In a fourth step 204 the analysis component 14 then executes the selected job, analyzing any required data stored in the local data store 11 as necessary to execute the job.

In a fifth step 205 the dispatcher 15 then confirms completion of the job by the analysis component 14 to the data manager 16.

When the data manager 16 receives confirmation of completion of the job, in a sixth step 206 the data manager 16 removes the job from the segment job queue 12, and writes any updated data produced as output data by the job into the local data store 11 and marks this updated data as being changed data in the local data store 11. This updated data generated as an output by the job may be additional data to the data stored in the local data store 11, or may replace data stored in the local data store 11.

The analysis server 4 then repeats the first to sixth steps 201 to 206 as necessary. It should be noted that because any updated data stored in the local data store 11 as a result of a job is identified as changed data, this updated changed data may result in further jobs being identified and added to the segment job queue 12 by the assessor 13.

The first to sixth steps 201 to 206 are repeated until there is no changed data remaining in the local data store 11 (that is, all of the data marked as changed has been processed and had the changed marking removed), and one of the following conditions applies:
A) There are no jobs remaining in the segment job queue 12; or
B) All remaining jobs in the segment job queue 12 are jobs which the analysis component 14 is not authorized to carry out.

The processing of jobs is then stopped.

The repeating of the first to sixth steps may also be interrupted and the processing of jobs stopped if one of the following conditions applies:
C) A predetermined processing time limit has been reached; or
D) An external command to stop processing is received by the data manager 16.

When the processing of jobs is stopped all updated data in the local data store 11 is copied back to the central data store 6 and used to replace the corresponding changed data stored in the central data store 6. Further, the changed data in the central data store 6 which was copied to the local data store 11 and was the subject of the just ended processing is no longer identified as changed data, since this data has now been processed and assessed. Any flag identifying the changed data which was the subject of the processing or the segment as being "in processing" is removed.

Any storage time of the oldest changed data relating to the segment and corresponding to changed data which is the subject of processing must be removed or replaced by a null value as appropriate.

In one example the storage time of the oldest changed data may be removed or replaced when the changed data is copied to the local data store 11. This may simplify handling the situation where further changed data relating to a segment is received at the central data store 6 while changed data of the segment is being processed in the analysis server 4.

In another example the storage time of the oldest changed data may be removed or replaced when the updated data in the local data store 11 is copied back to the central data store 6 and used to replace the corresponding changed data stored in the central data store 6. This may ensure that processing of changed data is not unduly delayed in the event that there is a failure of the analysis server 4, since the changed data will keep the same storage time.

Any jobs in the central job queue 8 previously copied to the segment job queue 12, which were marked as being "in processing", and have been completed are marked as having been completed. Any jobs in the central job queue 8 previously copied to the segment job queue 12, which were marked as being "in processing", and have not been completed have the "in processing" marking removed. Any jobs remaining in the segment job queue 12 which were not previously copied from the central job queue 8 are copied to the central job queue 8.

The local data store 11 and the segment job queue 12 are then cleared if necessary.

The segment processing manager 9 then selects a further segment from the central data store 6 for processing by the segment processing engine 10 of the analysis server 4 and the processing discussed above is repeated.

The conditions A) and B) identified above may alternatively be summarized, in combination, as a single condition that there are no remaining jobs in the segment job queue which the analysis component 14 is authorized to process.

The condition C) identified above acts to limit the amount of unsaved work that is done in a single round of processing, and which is at risk of being lost if the server fails for any reason. The condition C) may also assist recovery of the analysis server 4 if it becomes hung up or locked in an infinite loop during the analysis, by stopping the processing.

The condition D allows for a controlled ending of the processing, for example when a manual server shutdown command is received, or other circumstances where it is decided to save the results of the processing already completed and stop further processing.

Optionally, in the conditions C) and D) the stopping of the processing of jobs may be temporary so that the processing is paused and subsequently restarted, rather than being a permanent stop.

Any jobs which remain in the segment job queue because the analysis component is not authorized to process them may be flagged when they are copied or returned to the central job queue to indicate that they require special processing.

There are a number of possible reasons why the analysis component may not be authorized to process a job. One example is that processing the job may require processing capabilities which the analysis component does not have, so that the analysis component is unable to process the job. Another example is that the analysis component is capable of processing the job but that this will take an unacceptable length of time. Another example is that there may be security or privacy concerns regarding the job.

The above description is of an example in which a segment is processed which has both new changed data and jobs associated with it. It will be understood that when a segment is processed which has only new changed data or only jobs associated with it, the parts of the method which are unnecessary because they relate to the element which is not present can be omitted.

As discussed above, the system may include a plurality of analysis servers. The analysis servers may have different capabilities. For example, most of the analysis servers may be authorized to deal with routine tasks but not be authorized to deal with some sensitive, specialist or rare processing, with only a few, or one, enhanced analysis sever authorized to deal with these sensitive, specialist or rare tasks. In an example where the analysis servers operate in a pull mode, any flagged jobs may then be selectively picked up by appropriate enhanced analysis sever(s) for processing. In alternative examples where the analysis servers operate in a push mode any flagged jobs may be selectively passed to the enhanced analysis sever(s) for processing.

The present invention allows the processing of all of the jobs or tasks associated with a data segment, including the processing of newly received data to be added to the saved data segment, to be carried out as a single continuous operation in RAM without requiring data to be written to or read from the main disc data store during the processing. This may increase the speed and efficiency of the data processing.

In the embodiment described above jobs arise only from changed data and jobs can only be added to the central job queue 8 as a result of their being copied to the central job queue 8 from a segment job queue 12 because they have not been completed at the end of a segment processing operation. In some examples it may also be possible to place jobs directly in the central job queue 8. This may for example be done by other parts of the data processing system 1.

In an alternative embodiment the assessor 13 may have the additional function of analyzing the jobs stored in the segment job queue 12 to determine whether any of the jobs will output data which will alter data used as an input for other ones of the jobs. If any such interactions are identified the assessor may re-order the jobs so that they are carried out in a sequence so that the jobs which output data used as an input are carried out before the jobs using that data as an input. This may reduce or avoid any requirement to repeat some of the jobs as a consequence of changes to data made by other jobs.

In the embodiment described above the data manager 16 reviews each of the jobs in the segment job queue 12 and determines what data will be required by the analysis component 14 in order to carry out the job, and what data may be affected (that is, replaced or altered) by the output data of the job so that the data manager 16 can carry out a pre-fetching operation to copy the required data to the local data store 11. This may improve efficiency by allowing the requests for the required data to be batched.

In an alternative embodiment this pre-fetching operation may be omitted. In one such embodiment, when the analysis component is executing a job and requests required data that is not present in the local data store, the data manager may obtain the required data from the central data store and store the required data in the local data store.

The embodiment described above assigns priorities to data segments, with the priorities being assigned taking into account whether any jobs relating to the data segment are stored in the central job queue, and stores the priorities in the segment details table together with the times at which new data relating to the segments was received. In an alternative embodiment, when new data for a segment is received at the central data store the job of processing that new data to incorporate it with the previously recorded data for that segment is added to the central job queue. If the central job queue is a First In First Out (FIFO) queue the queue order can be used to control the sequence in which new data is processed in place of the timestamps used in the embodiment described above. In further embodiments a separate queue may be used for jobs having different priorities.

The embodiment described above processes a single segment at a time in an analysis server. In other examples multiple segments may be processed simultaneously by an analysis server.

The embodiment described above operates synchronously. In other examples the method may be carried out asynchronously.

The embodiment described above processes and stores data segments where each data segment comprises data relating to a single consumer. In other examples other criteria may be used to organize data into segments. The data segments must be self contained groups of data such that the analysis component only operates on a single segment in order to execute a job, and does not operate across multiple segments. In the embodiment described above the data segments correspond to data about individual real-world objects, that is, individual consumers, so that analysis on a single segment is meaningful. In some examples the segments may be summary data relating to groups of customers, summed data relating to multiple properties related to a single customer, or data relating to a customer account.

The invention has been discussed primarily with respect to processing data regarding consumption of electricity, however it will be appreciated that the methods described herein can equally be applied to consumption of water or gas supplied to a household. The invention may also be applied to other fields such as logistics or transport systems.

Consumption of water and gas can be measured using techniques that are well known to the skilled person, for example based on use of water and gas meters. Water and gas consumption, in particular water consumption, may be measured at a lower rate, for example at least once every 300 seconds or at least once every 60 seconds, in order to generate water consumption data that may be used to identify events associated with consumption of water. The rate of flow of water or gas at each time interval may be measured, along with the total volume consumed over time in a manner analogous to power and energy measurements of electricity consumption. Additionally or alternatively, water and gas consumption may be measured at measurement points after intervals of volume consumption rather than intervals of time, for example a measurement of time elapsed for each unit volume (e.g. litre) of water to be consumed.

The apparatus described above may be implemented at least in part in software. Those skilled in the art will appreciate that the apparatus described above may be implemented using general purpose computer equipment or using bespoke equipment.

The hardware elements, operating systems and programming languages of such computers are conventional in nature, and it is presumed that those skilled in the art are adequately familiar therewith. Of course, the server functions may be implemented in a distributed fashion on a number of similar platforms, to distribute the processing load.

Here, aspects of the methods and apparatuses described herein can be executed on a computing device such as a server. Program aspects of the technology can be thought of as "products" or "articles of manufacture" typically in the form of executable code and/or associated data that is carried on or embodied in a type of machine readable medium. "Storage" type media include any or all of the memory of the computers, processors or the like, or associated modules thereof, such as various semiconductor memories, tape drives, disk drives, and the like, which may provide storage at any time for the software programming. All or portions of the software may at times be communicated through the Internet or various other telecommunications networks. Such communications, for example, may enable loading of the software from one computer or processor into another computer or processor. Thus, another type of media that may bear the software elements includes optical, electrical and electromagnetic waves, such as used across physical interfaces between local devices, through wired and optical landline networks and over various wireless links. The physical elements that carry such waves, such as wired or wireless links, optical links or the like, also may be considered as media bearing the software. As used herein, unless restricted to tangible non-transitory "storage" media, terms such as computer or machine "readable medium" refer to any medium that participates in providing instructions to a processor for execution.

Hence, a machine readable medium may take many forms, including but not limited to, a tangible storage carrier, a carrier wave medium or physical transaction medium. Non-volatile storage media include, for example, optical or magnetic disks, such as any of the storage devices in computer(s) or the like, such as may be used to implement the encoder, the decoder, etc. shown in the drawings. Volatile storage media include dynamic memory, such as the main memory of a computer platform. Tangible transmission media include coaxial cables; copper wire and fiber optics, including the wires that comprise the bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards, paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will appreciate that while the foregoing has described what are considered to be the best mode and, where appropriate, other modes of performing the invention, the invention should not be limited to specific apparatus configurations or method steps disclosed in this description of the preferred embodiment. It is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings. Those skilled in the art will recognize that the invention has a broad range of applications, and that the embodiments may take a wide range of modifications without departing from the inventive concept as defined in the appended claims.

Although the present invention has been described in terms of specific exemplary embodiments, it will be appreciated that various modifications, alterations and/or combinations of features disclosed herein will be apparent to those skilled in the art without departing from the spirit and scope of the invention as set forth in the following claims.

## Claims

1. A method of operating a data processing system comprising a data store and an analysis means, wherein data is stored in the data store as segments of related data, the method comprising the steps of:
identifying data in the data store requiring processing;
identifying a data segment in the data store related to said identified data;
copying the identified data requiring processing to a data storage part of the analysis means; and
the analysis means reviewing the data in the data storage part of the analysis means to identify what analysis tasks must be carried out on the identified data;
the analysis means storing the identified analysis tasks in a task storage part of the analysis means;
the analysis means reviewing the stored analysis tasks to identify what required data is required to carry out the analysis tasks;
the analysis means reviewing the data in the data storage part of the analysis means to identify any missing required data which is not stored in the data storage part of the analysis means;
copying the identified missing required data to the data storage part of the analysis means;
the analysis means executing an analysis task from the task storage part of the analysis means;
the analysis means removing the executed analysis task from the task storage part of the analysis means and updating the data in the data storage part of the analysis means based on the output of the analysis task; and
the analysis means returning to the step of reviewing the data in the data storage part of the analysis means to identify what analysis tasks must be carried out on the identified data; and
when the execution of stored analysis tasks is stopped, updating the data in the data store based on the updated data in the data storage part of the analysis means;
wherein the data store comprises at least one data storage media and the functions of the analysis means are carried out in random access memory.

2. The method of claim 1, wherein the data processing system further comprises a job store storing analysis tasks, and the method includes the further steps of:
reviewing the analysis tasks stored in the job store to identify analysis tasks related to the identified data and the identified related data segment; and
copying the identified analysis tasks to the task storage part of the analysis means;
wherein these additional steps take place before the step of the analysis means reviewing the stored analysis tasks to identify what data is required to carry out the analysis tasks.

3. The method of claim 2, comprising the further step of, when the processing of stored analysis tasks is stopped, removing the executed analysis tasks from the job store.

4. The method of claim 2 or claim 3 wherein, if, when the processing of stored analysis tasks is stopped, there are analysis tasks in the task storage part which have not been executed, these analysis tasks which have not been executed are added to the job store.

5. The method of any preceding claim, wherein the data processing system comprises a plurality of analysis means.

6. The method of claim 5, wherein the identified data and the identified related data segment copied to the data storage part of the analysis means are marked as under processing in the data store so that they cannot be copied to another one of the plurality of analysis means.

7. The method of claim 5, wherein the analysis tasks copied to the task storage part of the analysis means are marked as under processing in the job store so that they cannot be copied to another one of the plurality of analysis means.

8. The method of any preceding claim wherein the analysis means reviews all of the stored analysis tasks to identify what data is required to carry out the analysis tasks and identifies all missing required data required by all of the analysis tasks before requesting copying all of the identified missing required data to the data storage part of the analysis means as a single request.

9. The method of any preceding claim, wherein the data in the data store requiring processing comprises new data and the required processing comprises updating a stored segment of related data to include the new data.

10. The method of claim 9, wherein the segments of related data comprise time series data and the data in the data store requiring processing comprises new data extending the time series.

11. The method of claim 9, wherein the segments of related data comprise time series data and the data in the data store requiring processing comprises new data relating to a time which is already included in the time series data stored in the data store.

12. The method of claim 11, wherein the time which is already included in the time series data is a time period.

13. The method of any preceding claim, wherein the execution of stored analysis tasks is stopped when the step of reviewing the data in the data storage part of the analysis means does not identify any further analysis tasks, and all stored analysis tasks have been carried out.

14. The method of any one of claims 1 to 12, wherein the processing of stored analysis tasks is stopped when the step of reviewing the data in the data storage part of the analysis means does not identify any further analysis tasks, and all stored analysis tasks which have not been carried out are analysis tasks which the analysis means is not authorized to carry out.

15. The method of claim 14, wherein the stored analysis tasks which have not been carried out are analysis tasks which the analysis means is not authorized to carry out because they are analysis tasks which the analysis means is not able to carry out.

16. The method of any one of claims 1 to 12, wherein the processing of stored analysis tasks is stopped when the analysis means reaches a predetermined processing time limit.

17. The method of any preceding claim, wherein the analysis means reviews the stored analysis tasks to identify what required data is required to carry out the analysis tasks and reviews the data in the data storage part of the analysis means to identify any missing required data which is not stored in the data storage part of the analysis means before executing an analysis task from the task storage part of the analysis means.

18. The method of any preceding claim, wherein the segments of related data comprise time series data, and each analysis task is carried out on data relating to a specified time.

19. The method of claim 18, wherein the specified time is a specified time period.

20. The method of any preceding claim, wherein the data storage media is a data storage disc.

21. The method of any preceding claim, wherein the segments of related data each comprise a time series of utility consumption values measured at a series of different times.

22. The method of claim 21, wherein the each segment of related data comprises a time series of utility consumption values for a single consumer.

23. The method of claim 21 or claim 22, wherein the utility is selected from gas, electricity and water.

24. A method according to claim 23, wherein the utility is electricity.

25. A method according to claim 24, wherein the measured electricity consumption data includes data of real power.

26. A method according to claim 24, wherein the measured electricity consumption data includes data of reactive power.

27. A method according to claim 24, wherein the measured electricity consumption data includes data of reactive power and real power.

28. A data processing system comprising means to carry out the method as set out in any one of claims 1 to 27.

29. A computer program comprising instructions which, when executed by a processor, cause the processor to perform the method of any one of claims 1 to 27.
